# EUROPÄISCHE PATENTSCHRIFT

(11) **EP 3 120 442 B1**
(45) Veröffentlichungstag und Bekanntmachung des Hinweises auf die Patenterteilung: **03.06.2020**
(21) Anmeldenummer: 15721116.0
(22) Anmeldetag: 17.03.2015
(51) Int. Cl.: H02K 11/00, H02K 5/08, H02K 11/33, H02K 5/10, H02K 5/18, H02K 9/22, H02K 21/22

(54) **ELEKTROMOTOR, INSBESONDERE AUSSENLÄUFERMOTOR, SOWIE ZWISCHENISOLIERTEIL FÜR EINEN ELEKTROMOTOR**
ELECTRIC MOTOR, IN PARTICULAR EXTERNAL ROTOR MOTOR, AND INTERMEDIATE INSULATING PART FOR AN ELECTRIC MOTOR
MOTEUR ÉLECTRIQUE, EN PARTICULIER MOTEUR À ROTOR EXTÉRIEUR, ET INTERCALAIRE ISOLANT POUR MOTEUR ÉLECTRIQUE

(30) Priorität: 20.03.2014 DE 102014004262
(43) Veröffentlichungstag der Anmeldung: 25.01.2017
(73) Patentinhaber: ZIEHL-ABEGG SE, 74653 Künzelsau (DE)
(72) Erfinder: ZECHALKO, Paul, 74635 Kupferzell (DE); STURM, Thorsten, 74238 Krautheim (DE)
(74) Vertreter: Jackisch-Kohl, Anna-Katharina
(86) Internationale Anmeldenummer: PCT/EP2015/000581
(87) Internationale Veröffentlichungsnummer: WO 2015/139831

(56) Entgegenhaltungen:
- EP-A1- 1 701 431
- EP-A1- 2 226 922
- EP-A2- 1 361 644
- WO-A1-2009/075247
- US-A1- 2013 334 906

## Beschreibung

Die Erfindung betrifft einen Elektromotor nach dem Oberbegriff des Anspruches 1.

Um bei Elektromotoren Durchschläge zu vermeiden, werden mit Hilfe eines Zwischenisolierteiles Luft- und Kriechstrecken eingestellt. Zusätzlich muss der Elektromotor aber auch abgedichtet werden, wofür in den Gehäusedeckel eingespritzte Dichtungselemente aus elastomerem Material oder separate O-Ringe als Dichtungsringe verwendet werden. Außerdem werden elektrische, zu kühlende Bauteile im Elektronikgehäuse mit Metallklammern an eine Kühlfläche gedrückt, um die Wärme von diesem Bauteil an die Kühlfläche abzugeben. Ein solcher Elektromotor ist jedoch aufwändig herzustellen und zu montieren, weil eine Vielzahl von Komponenten für die verschiedenen Funktionen erforderlich ist.

Ein Elektromotor mit einem Zwischenisolierteil ist aus EP 1 361 644 A2 bekannt. Es wird zwischen dem Gehäusedeckel und den elektronischen Bauteilen auf einer Leiterplatte in den Elektronikraum eingefügt. Das Zwischenisolierteil weist axial verlaufende abstehende Stege auf, mit denen die Leiterplatte gegen den Boden des Elektronikraumes gedrückt wird.

Bei einem anderen bekannten Elektromotor (US 2013/0334906 A1) ist das Zwischenisolierteil an seiner einen Seite mit einem als Blattfeder ausgebildeten Andrückelement versehen, das das zu kühlende Bauelement axial gegen ein wärmeableitendes Element drückt.

Der Erfindung liegt die Aufgabe zugrunde, den gattungsgemäßen Elektromotor so auszubilden, dass eine einfache Montage und Fertigung eines Elektromotors möglich ist, bei dem nicht nur die notwendigen Luft- und Kriechstrecken eingehalten sind, sondern der auch ausreichend abgedichtet ist und bei dem die an den elektrischen Bauteilen entstehende Wärme zuverlässig abgeführt werden kann.

Diese Aufgabe wird beim gattungsgemäßen Elektromotor erfindungsgemäß mit den kennzeichnenden Merkmalen des Anspruches 1 gelöst.

Beim erfindungsgemäßen Elektromotor bildet das Zwischenisolierteil ein Multifunktionsbauteil, mit dem nicht nur die erforderlichen Luft- und/oder Kriechstrecken eingehalten werden können, sondern mit dem auch die notwendige Abdichtung mittels des Dichtteiles und die Wärmeübertragung des sich erwärmenden Bauteiles an die Kühlfläche gewährleistet ist. Das Zwischenisolierteil hat den Trägerteil, der aus einer Hartkomponente besteht und damit dem Zwischenisolierteil die notwendige Stabilität und Festigkeit gibt. Der Dichtteil wird durch die Weichkomponente gebildet, die stoffschlüssig und/oder formschlüssig mit der Hartkomponente verbunden ist. Schließlich hat das Zwischenisolierteil das wenigstens eine Andrückelement, das dem Mantel des Gehäusedeckels mit radialem Abstand gegenüberliegt und mit dem das die Wärme erzeugende Bauteil gegen die Kühlfläche gedrückt wird. Dann kann die Wärme von diesem Bauteil einwandfrei an die Kühlfläche abgeleitet werden. Es ist somit nur ein einziges Bauteil erforderlich, um die verschiedenen Funktionen zu erfüllen. Der Einsatz nur eines einzigen Bauteiles führt nicht nur zu geringeren Herstellkosten, sondern es können auch Material- und Montagekosten gespart werden. Auch wird das Risiko einer fehlerhaften Montage zuverlässig vermieden. Das Andrückelement ist Teil einer Wand, die eine Tasche für das anzudrückende Bauteil begrenzt. Die die Tasche begrenzende Wand wird durch eine Profilgebung des Mantels des Zwischenisolierteiles gebildet. Das zu kühlende Bauteil befindet sich in der Einbaulage in dieser Tasche und wird durch einen Teil der Begrenzungswand gegen die Kühlfläche gedrückt.

Das Zwischenisolierteil ist zumindest über einen Teil seines Umfanges mit einem Mantel versehen, an dessen freiem Rand der Dichtteil vorgesehen ist. Vorteilhaft ist dieser Dichtteil über den gesamten Umfang des Zwischenisolierteiles vorgesehen, so dass eine optimale Abdichtung über den Umfang des Elektromotors gewährleistet ist.

Mit dem Dichtteil wird der Spalt zwischen dem Rand des Gehäusedeckels und dem Stator abgedichtet. Dadurch wird verhindert, dass von außen über den Spalt Schmutzteile und/oder Feuchtigkeit in das Innere des Elektromotors, insbesondere in den Elektronikraum, gelangen.

Um eine optimale Abdichtung zu gewährleisten, wird der freie Rand des Zwischenisolierteiles vom Dichtteil umgriffen.

Eine sichere Befestigung des Dichtteils ist vorteilhaft dann gegeben, wenn der freie Rand des Zwischenisolierteiles über die Außenseite seines Mantels vorsteht. Dann kann der Dichtteil so an diesem vorstehenden Rand angebracht werden, dass der Dichtteil sicher gehalten wird.

Bei einer vorteilhaften Ausbildung ist das Zwischenisolierteil mit wenigstens einer, vorzugsweise jedoch mit mehreren Durchtrittsöffnungen für Befestigungsschrauben versehen, mit denen beispielsweise der Gehäusedeckel unter Zwischenlage des Zwischenisolierteiles am Stator befestigt wird. Am Rand der Durchtrittsöffnung ist der aus der Weichkomponente bestehende Dichtring vorgesehen, der in der Einbaulage dichtend an der die Durchtrittsöffnung durchsetzenden Befestigungsschraube anliegt und damit die Durchtrittsöffnung abdichtet.

Damit mit dem Andrückelement das Bauteil zuverlässig an die Kühlfläche gedrückt wird, ist es in vorteilhafter Weise federnd nachgiebig ausgebildet. Dies führt dazu, dass in der Einbaulage das Andrückelement elastisch so verformt ist, dass es die erforderliche Anpresskraft auf das Bauteil ausübt.

Die Anpressung des Bauteils an die Kühlfläche wird noch verbessert, wenn das Andrückelement mit wenigstens einer Andrücknase versehen ist. Mit ihr lässt sich gezielt die erforderliche hohe Andrückkraft erreichen.

Die Andrücknase ist vorteilhaft an ihrem freien Ende mit einer Fase versehen. Wird die Leiterplatte in den Gehäusedeckel mit dem eingelegten Zwischenisolierteil montiert, dann trifft die Andrücknase mit dieser Fase auf das anzudrückende Bauteil. Das Andrückelement wird dadurch elastisch verformt, wodurch die Andrücknase in der Einbaulage mit ausreichend hoher Kraft gegen das Bauteil drückt. Zudem erleichtert die Fase die Positionierung des anzudrückenden Bauteiles.

Damit das Andrückelement ausreichend federnd nachgiebig ist, ist es vorteilhaft über Stege an den Mantel des Zwischenisolierteiles angebunden. Hierbei sind die Stege dünnwandig ausgebildet, so dass die erforderliche elastische Verformung des Andrückelementes einfach möglich ist, aber nicht in eine plastische Verformung übergeht.

Bei einer vorteilhaften Ausführungsform wird die Kühlfläche für das zu kühlende Bauteil durch den Mantel des Gehäusedeckels gebildet, der aus einem entsprechenden Wärme aufnehmenden Material, insbesondere aus Metall, besteht.

Das Andrückelement ist vorteilhaft Teil einer Wand, die eine Tasche begrenzt.

Bei einer bevorzugten Ausführungsform ist das Andrückelement federnd nachgiebig ausgebildet. Das Andrückelement ist in der Einbaulage elastisch verformt und erzeugt den notwendigen Anpressdruck auf das zu kühlende Bauteil. Außerdem ist durch die elastische Verformung gewährleistet, dass auch noch nach längerer Einsatzdauer des Zwischenisolierteiles die notwendige Anpresskraft auf das zu kühlende Bauteil wirkt.

Bevorzugt ist das Andrückelement mit wenigstens einer Andrücknase versehen, mit der eine entsprechend hohe Anpresskraft auf das zu kühlende Bauteil ausgeübt werden kann.

Die Andrücknase ist bevorzugt am freien Ende mit einer Fase versehen. Sie trifft bei der Montage auf das zu kühlende Bauteil. Dies führt beim weiteren Aufschieben zu einer elastischen Verformung des Andrückelementes.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Die Erfindung wird anhand eines in der Zeichnung dargestellten Ausführungsbeispieles näher erläutert. Es zeigen
- Fig. 1: in perspektivischer Darstellung ein Zwischenisolierteil,
- Fig. 2: das Zwischenisolierteil gemäß Fig. 1 in perspektivischer Ansicht von der anderen Seite,
- Fig. 3: eine Draufsicht auf das Zwischenisolierteil,
- Fig. 4: eine Seitenansicht des Zwischenisolierteiles gemäß Fig. 3,

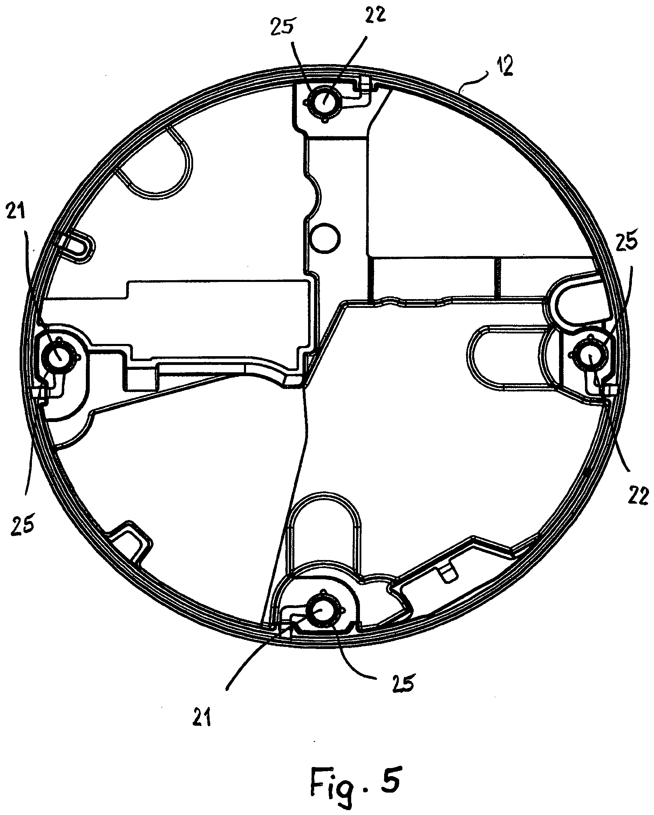

- Fig. 5: eine Unteransicht des Zwischenisolierteiles,

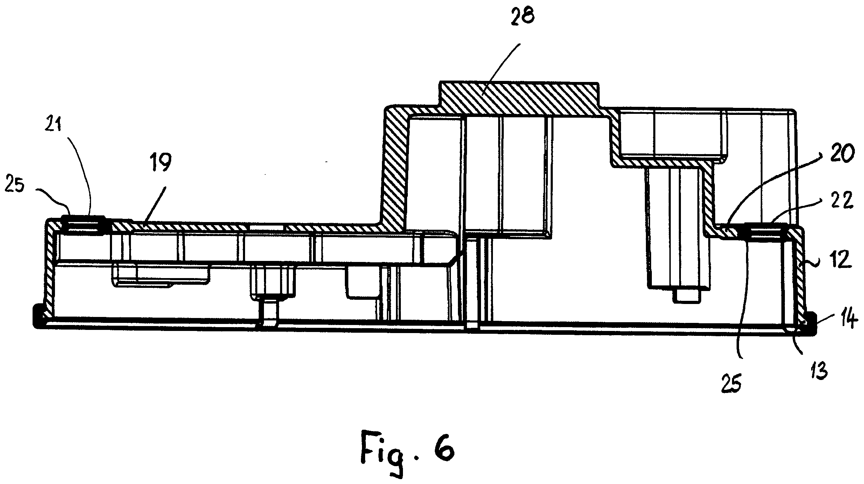

- Fig. 6: in vergrößerter Darstellung einen Schnitt längs der Linie VI-VI in Fig. 3,
- Fig. 7: im Schnitt das Zwischenisolierteil zwischen einem Gehäusedeckel und einem Statorflansch eines erfindungsgemäßen Elektromotors,
- Fig. 8: eine Abdichtung des Zwischenisolierteiles in vergrößerter Darstellung,
- Fig. 9: einen Schnitt durch das zwischen dem Gehäusedeckel und dem Statorflansch liegende Zwischenisolierteil,
- Fig. 10: in vergrößerter Darstellung die Einzelheit X in Fig. 9,
- Fig. 11: in einem Radialschnitt und in vergrößerter Darstellung das Andrückelement des Zwischenisolierteiles.

Das Zwischenisolierteil 1 wird bei Elektromotoren eingesetzt und erfüllt drei Funktionen. Die erste Funktion besteht darin, für die Einhaltung der Luft- und Kriechstrecken zu sorgen und dadurch Durchschläge zu vermeiden. Die zweite Funktion besteht darin, den Elektromotor gegen äußere Einflüsse abzudichten. Die dritte Funktion des Zwischenisolierteiles 1 besteht schließlich darin, in einem Elektronikraum untergebrachte Elektronikbauteile gegen Kühlflächen zu drücken, so dass die im Betrieb auftretende Wärme von dem jeweiligen Elektronikbauteil zuverlässig auf die Kühlfläche übertragen wird. Das Zwischenisolierteil 1 bildet somit ein Multifunktionsbauteil, das die beschriebenen unterschiedlichen Funktionen in sich vereinigt. Dadurch wird der Aufbau des im Zwischenisolierteil 1 enthaltenden Elektromotors vereinfacht. Auch die Montage wird erheblich vereinfacht, da für die unterschiedlichen Funktionen nicht unterschiedliche Bauteile erforderlich sind. Durch Einsetzen des Zwischenisolierteiles 1 werden alle drei genannten Funktionen in einfacher Weise erfüllt.

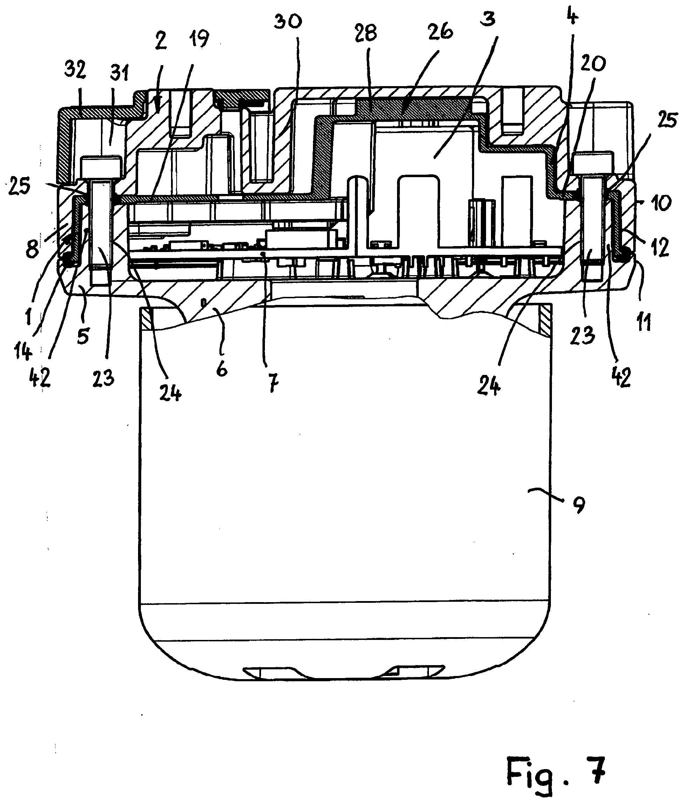

Fig. 7 zeigt beispielhaft die Einbaulage des Zwischenisolierteiles 1. Es wird in einen Gehäusedeckel 2 eingesetzt, der aus metallischem Werkstoff besteht und haubenförmig ausgebildet ist. Mit dem Gehäusedeckel 2 wird ein Elektronikraum 3 abgeschlossen, der sich in einem Elektronikgehäuse 4 befindet. Im dargestellten Ausführungsbeispiel wird das Elektronikgehäuse 4 von einem Statorflansch 5 und dem Gehäusedeckel 2 gebildet, der auf dem Statorflansch 5 befestigt wird. Er ist Teil eines von einem Rotor 9 umgebenen Stators 6. Der Rotor 9 umgibt den Stator topfförmig.

Das Elektronikgehäuse 4 kann auch ein vom Statorflansch 5 getrenntes Bauteil sein, das in bekannter Weise am Statorflansch befestigt wird.

Im Elektronikraum 3 ist wenigstens eine Leiterplatte 7 untergebracht, die die für den Betrieb des Elektromotors notwendigen Elektronikbauteile trägt, wie beispielsweise Gleichrichter, Dioden und dergleichen.

Der Gehäusedeckel 2 hat einen umlaufenden Mantel 8, der einen Mantel 12 des Zwischenisolierteiles 1 umgibt und mit seiner Außenseite 10 etwa in Höhe des äußeren Randes 11 des Statorflansches 5 liegt.

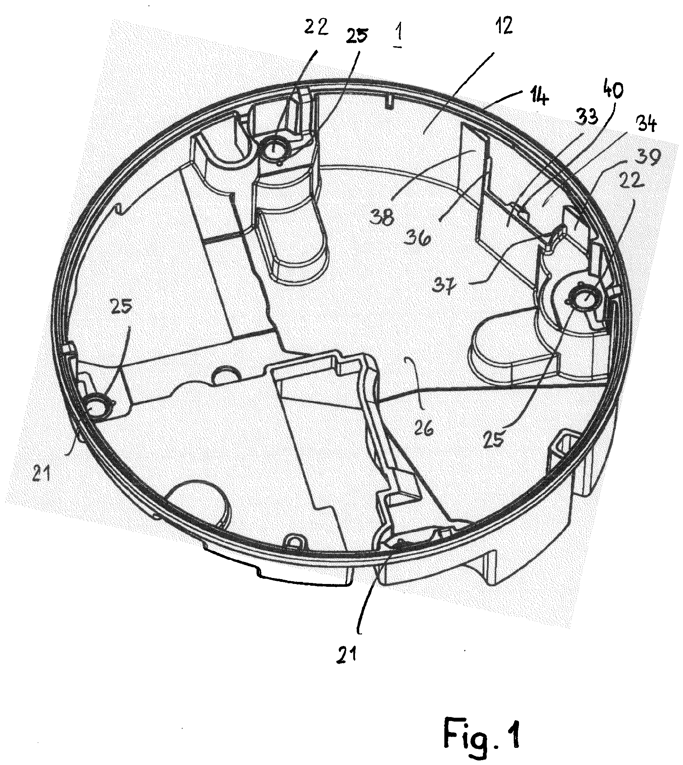

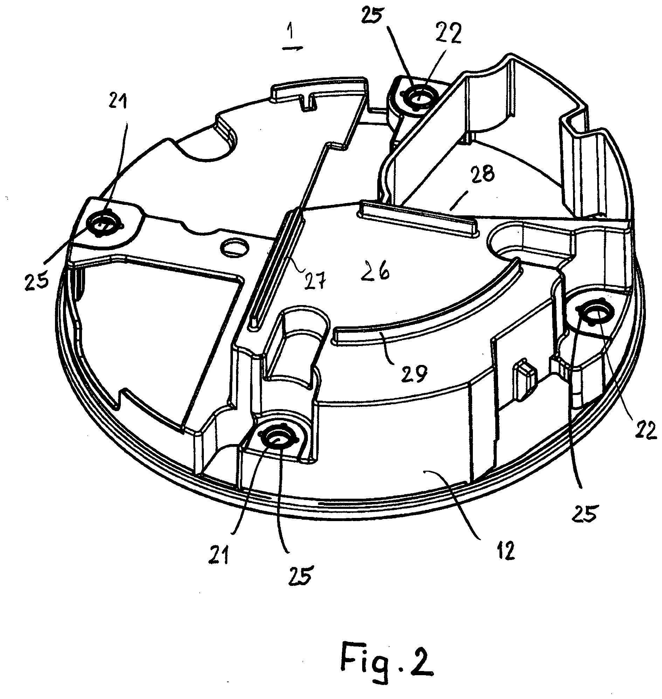

Der Mantel 12 wird über seinen Umfang vom Mantel 8 des Gehäusedeckels 2 unter Bildung eines geringen Luftspaltes umgeben. Der Mantel 12 hat, wie sich aus den Fig. 1 und 2 ergibt, über den Umfang des Zwischenisolierteiles unterschiedliche Höhe. Die Ausbildung des Mantels 12 hängt von der Gestaltung des Mantels 8 des Gehäusedeckels 2 ab.

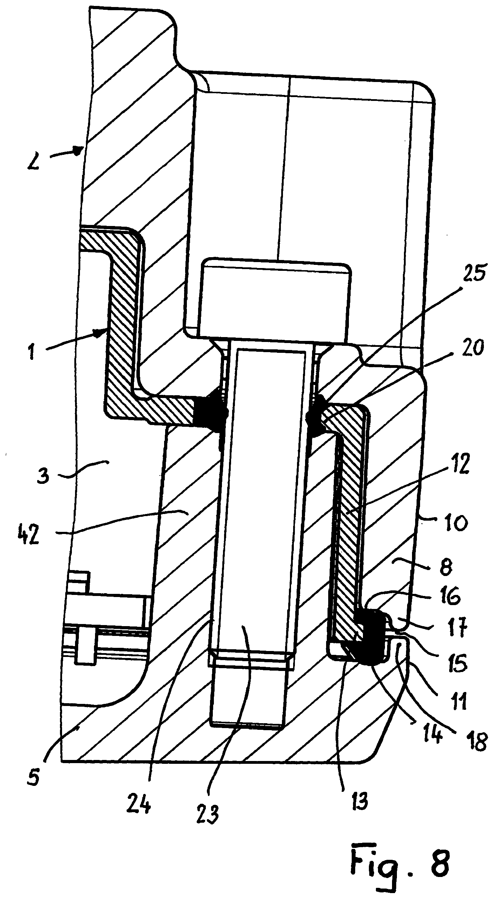

Das Zwischenisolierteil 1 besteht aus einem harten Kunststoff, beispielsweise aus PET. Am freien Rand 13 des Mantels 12 ist eine Weichdichtung 14 vorgesehen, die sich über den Umfang des Mantels 12 erstreckt und den umlaufenden Spalt 15 (Fig. 8) zwischen dem freien Ende des Mantels 8 des Gehäusedeckels 2 und der Stirnseite des Statorflansches 5 nach außen abdichtet. Die Weichdichtung 14 ist vorteilhaft an den Mantel 12 angespritzt und besteht beispielsweise aus TPE. Um einen sicheren Halt der Weichdichtung 14 am Mantel 12 zu gewährleisten, ist der freie Rand 13 des Mantels 12 so ausgebildet, dass er radial nach außen vorsteht. Die Weichdichtung 14 umgreift diesen vorstehenden Rand 13 u-förmig (Fig. 8). Diese Gestaltung der Weichdichtung 14 hat den Vorteil, dass über den Umfang des Mantels 12 ein Dichtring gebildet wird, dessen Breite wesentlich größer ist als die Breite des abzudichtenden Spaltes 15.

Die Verbindung zwischen dem Zwischenisolierteil und der Weichdichtung 14 kann auch formschlüssig gestaltet sein.

Der Mantel 8 des Gehäusedeckels 2 ist an seiner Innenseite mit einem umlaufenden Absatz 16 versehen, der radial nach außen durch den axial vorstehenden Randabschnitt 17 begrenzt ist. Der Statorflansch 5 ist am radial äußeren Rand mit einer ringförmig umlaufenden Erhöhung 18 versehen, die dem Randabschnitt 17 axial gegenüberliegt. Durch die beiden Abschnitte 17, 18 wird die Weichdichtung 14 nach außen optimal abgeschirmt, so dass eine Beschädigung der Weichdichtung im Betrieb des Elektromotors vermieden wird. In der Einbaulage wird die Weichdichtung 14 zwischen dem Boden des Absatzes 16 und dem Statorflansch 5 axial elastisch verformt, wodurch eine optimale Abdichtung gewährleistet ist.

An den Mantel 12 des Zwischenisolierteiles 1 schließt über einen Teil des Umfanges ein quer, vorzugsweise senkrecht zu ihm verlaufender Wandabschnitt 19, 20 an. In diesen Wandabschnitten befinden sich Durchtrittsöffnungen 21, 22 für Befestigungsschrauben 23, mit denen der Gehäusedeckel 2 unter Zwischenlage des Zwischenisolierteiles 1 auf dem Statorflansch 5 befestigt wird. Vom Statorflansch 5 stehen Dome 42 ab, die vorteilhaft einstückig mit dem Statorflansch 5 ausgebildet sind und in welche die Befestigungsschrauben 23 geschraubt werden. Die Dome 42 können mit Gewindebohrungen für die Befestigungsschrauben 23 versehen sein. Anstelle der Gewindebohrungen können die Dome 42 auch mit Sacklochbohrungen versehen sein, in die selbstschneidende Befestigungsschrauben 23 geschraubt werden.

Am Rand der Durchtrittsöffnungen 21, 22 ist jeweils ein Dichtring 25 vorgesehen, der vorteilhaft aus dem gleichen Weichmaterial wie die Weichdichtung 14 hergestellt ist. Mit dem Dichtring 25 wird die jeweilige Durchtrittsöffnung 21, 22 in der montierten Lage des Gehäusedeckels 2 abgedichtet. Da die Dichtringe 25 aus einer weichen Komponente bestehen, werden die Befestigungsschrauben 23 einwandfrei durch die Dichtringe 25 abgedichtet (Fig. 7 und 8).

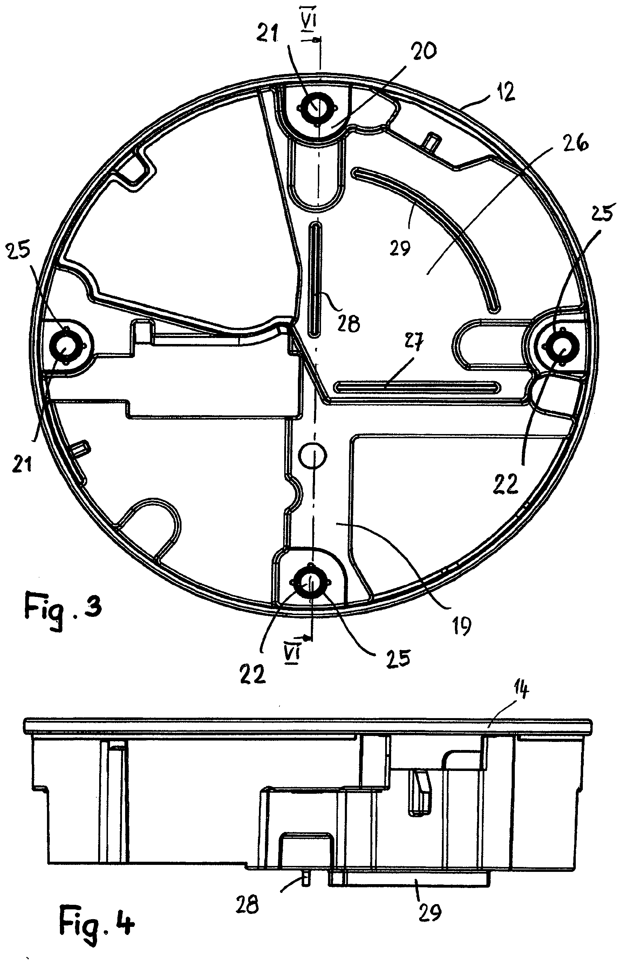

Die Lage und Anordnung der Wandabschnitte 19, 20 richtet sich nach der Innengestaltung des Elektronikraumes 3, d. h. nach der Anordnung der elektrischen bzw. elektronischen Bauteile im Elektronikraum 3. Bei der beispielhaften Ausgestaltung hat das Zwischenisolierteil 1 einen erhöhten Bereich 26, der so gestaltet ist, dass er in der Einbaulage an der Innenseite des Gehäusedeckels 2 anliegt (Fig. 7). Dieser erhöhte Bereich 26 erstreckt sich etwa über einen Winkelbereich von 90° und ist in Draufsicht sektorförmig ausgebildet (Fig. 2 und 3). Auf diesem erhöhten Bereich 26 befinden sich stegförmige Vorsprünge 27 bis 29 (Fig. 2 und 3), von denen die Vorsprünge 27, 28 geradlinig und der Vorsprung 29 bogenförmig verlaufen. Die geraden Vorsprünge 27, 28 liegen rechtwinklig zueinander. In der Einbaulage liegt das Zwischenisolierteil 1 mit den Vorsprüngen 27 bis 29 an der Innenseite des Gehäusedeckels 2 an (Fig. 7). In der Einbaulage drückt der Gehäusedeckel 2 auf die Vorsprünge 27 bis 29, so dass das Zwischenisolierteil 1 fest in seine Einbaulage gedrückt wird.

Das Zwischenisolierteil 1 ist so ausgebildet, dass es zumindest über seinen größten Teil an der Innenseite des Gehäusedeckels 2 flächig anliegt (Fig. 7). Hierbei ist der Gehäusedeckel 2 beispielhaft so ausgebildet, dass er mit einem eingezogenen Bereich 30 auf dem Wandabschnitt 19 des Zwischenisolierteiles 1 aufliegt und dieses zusätzlich in der Einbaulage sichert.

Der Gehäusedeckel 2 ist mit einer Vertiefung 31 versehen, die durch ein Abdeckteil 32 geschlossen werden kann. Die Vertiefung 31 kann als Aufnahmeraum für Zusatzkomponenten genutzt werden. Das Abdeckteil 32 wird lösbar mit dem Gehäusedeckel 2 verbunden.

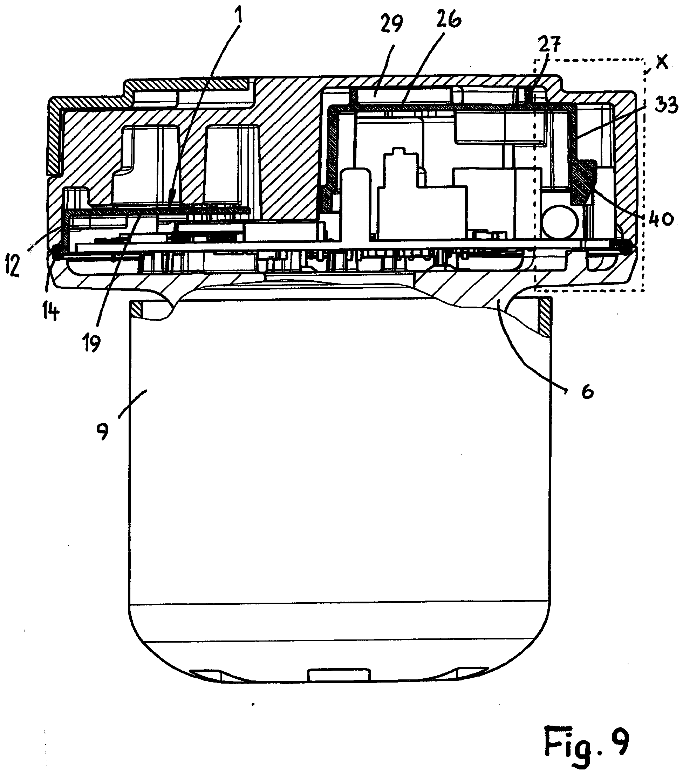

Das Zwischenisolierteil 1 dient nicht nur zur Einhaltung der Luft- und Kriechstrecken und der Abdichtung des Motors, sondern auch zum Andrücken von Elektronikbauteilen an Kühlflächen. Hierzu ist das Zwischenisolierteil 1 mit wenigstens einem Andrückelement 33 versehen, das anhand der Fig. 9 bis 11 beschrieben werden wird.

Beim dargestellten Ausführungsbeispiel hat das Zwischenisolierteil 1 lediglich ein einziges solches Andrückelement 33 (Fig. 1). Je nach Ausgestaltung des Elektromotors kann das Zwischenisolierteil 1 mit weiteren Andrückelementen 33 versehen sein.

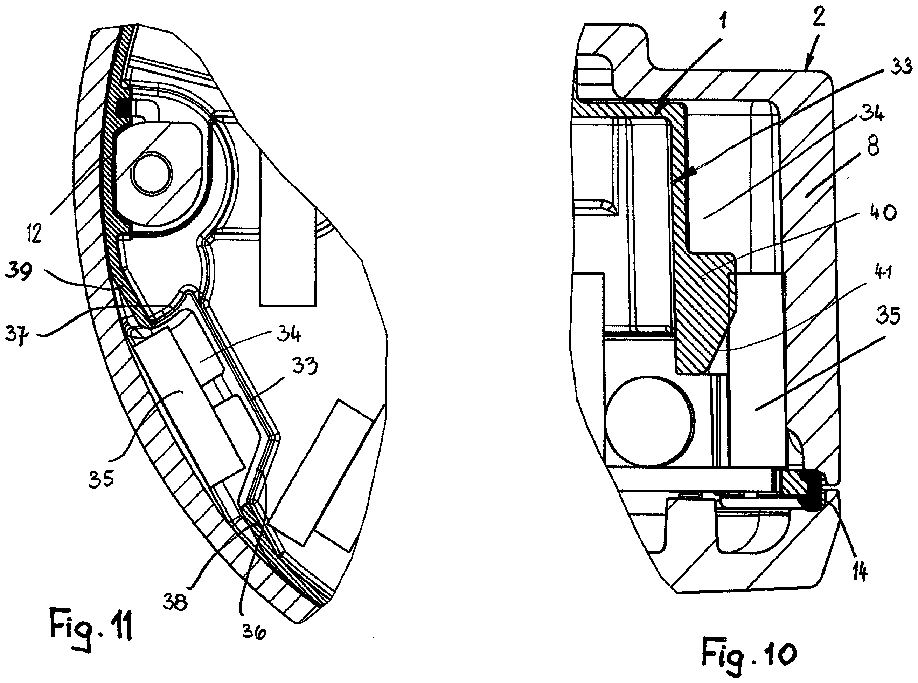

Das Andrückelement 33 ist im Bereich des Mantels 12 des Zwischenisolierteiles 1 vorgesehen und begrenzt teilweise eine Tasche 34, in der das zu kühlende Bauteil 35 in der Einbaulage liegt. Die Tasche 34 hat etwa rechteckigen Umriss und wird durch eine entsprechende Ausformung des Mantels 12 des Zwischenisolierteiles 1 gebildet. Wie aus den Fig. 1 und 11 hervorgeht, liegt das Andrückelement 33 mit Abstand zum Mantel 12 innerhalb des Zwischenisolierteiles 1 und ist an seinen in Umfangsrichtung liegenden Enden durch jeweils einen Schenkel 36, 37 mit dem Mantel 12 verbunden.

Das Andrückelement 33 und die Schenkel 36, 37 haben gleiche Höhe und erstrecken sich vom erhöhten Abschnitt 26 aus senkrecht. Der Schenkel 36 schließt stumpfwinklig an das Andrückelement 33 an, während der gegenüber liegende Schenkel 37 einen spitzen Winkel mit dem Andrückelement 33 einschließt. Beide Schenkel 36, 37 gehen an ihren vom Andrückelement 33 abgewandten Ende über jeweils einen Zwischensteg 38, 39 in den Mantel 12 über. Wie aus Fig. 11 hervorgeht, schließen die Zwischenstege 38, 39 unter großen stumpfen Winkeln an den Mantel 12 des Zwischenisolierteiles 1 an.

Das Andrückelement 33 und die Schenkel 36, 37 sind dünnwandige Bauteile. Die Schenkel 36, 37 gewährleisten, dass das Andrückelement 33 zum Andrücken des Bauteiles 35 elastisch federn kann. Mit dem Andrückelement 33 wird das Bauteil 35 gegen die Innenwand des Mantels 8 des Gehäusedeckels 2 gedrückt, der aus wärmeleitendem Material, insbesondere aus Metall, besteht. Der Mantel 8 nimmt die Wärme des Bauteiles 35 auf. Da es unter der Kraft des Andrückelementes 33 am Mantel 8 des Gehäusedeckels 2 anliegt, ist ein optimaler Wärmeübergang sichergestellt. Das Andrückelement 33 ist an seinem freien Rand in halber Umfangslänge mit einer Andrücknase 40 versehen, die in Richtung auf den Mantel 8 des Gehäusedeckels 2 vorsteht und an ihrem freien Ende an ihrer dem Mantel 8 zugewandten Seite mit einer Abschrägung 41 versehen ist.

Das Zwischenisolierteil 1 wird bei der Montage in den Gehäusedeckel 2 eingelegt. Anschließend wird die Leiterplatte 7 mit dem anzudrückenden Elektronikbauteil 35 montiert. Beim Einsetzen der Leiterplatte in den Gehäusedeckel 2 sorgt die Anfasung 41 zuverlässig dafür, dass das anzudrückende Bauteil 35 in die für ihn vorgesehene Tasche 34 gelangt. Mit der Andrücknase 40 wird das Bauteil 35 fest gegen den Gehäusedeckelmantel 8 gedrückt, so dass ein guter Wärmeübergang vom Bauteil 35 zum Mantel 8 sichergestellt ist.

Das Zwischenisolierteil 1 ermöglicht auch einen Toleranzausgleich, da es aus dem harten Kunststoff besteht, der gewisse Verformungen beim Einbau des Zwischenisolierteiles 1 zulässt. Da auch das Andrückelement 33 dünnwandig ausgebildet ist, kann es sich elastisch so weit verformen, dass die verdickte Andrücknase 40 das zu kühlende Bauteil 35 mit ausreichender Kraft gegen den Mantel 8 drückt.

Da mit dem Zwischenisolierteil 1 sowohl die notwendigen Luft- und Kriechstrecken eingehalten als auch der Elektromotor abgedichtet und Elektronikbauteile an Kühlflächen gedrückt werden, ergibt sich eine sehr kostengünstige Lösung, weil für diese drei unterschiedlichen Funktionen nur ein einziges Bauteil vorgesehen ist. Zusätzlich wird das Risiko einer fehlerhaften Montage verringert.

Zur Wärmeübertragung kann die Ausbildung auch so getroffen sein, dass im Elektronikraum 3 gesonderte Kühlelemente vorhanden sind. Auch in diesem Falle wird das zu kühlende, auf der Leiterplatte 7 sitzende Bauteil 35 durch das Andrückelement 33 in der beschriebenen Weise gegen das entsprechende Kühlelement gedrückt. Weiter kann das Zwischenisolierteil 1 weitere Andrückelemente aufweisen, um nicht nur ein, sondern zwei oder mehr Bauteile gegen Kühlflächen zu drücken.

## Patentansprüche

1. Elektromotor mit einem Stator (6), einem elektrische/elektronische Bauteile aufnehmenden Elektronikraum (3), der in einem Elektronikgehäuse (4) untergebracht und mit einem Gehäusedeckel (2) verschließbar ist, und mit wenigstens einem zur Einhaltung von Kriech- und/oder Luftstrecken zwischen dem Gehäusedeckel (2) und dem elektrischen/elektronischen Bauteilen vorgesehenen Zwischenisolierteil (1),
- wobei das Zwischenisolierteil (1) einen haubenförmigen Träger hat, der aus einem harten, elektrisch isolierenden Kunststoff besteht, an den stoffschlüssig und/oder formschlüssig wenigstens ein Dichtteil (14, 25) aus einer Weichkomponente angeschlossen ist,
- wobei das Zwischenisolierteil (1) einen zumindest über einen Teil seines Umfanges sich erstreckenden Mantel (12) aufweist,
- an dessen freiem Ende der Dichtteil (14, 25) angeordnet ist.
- wobei der Dichtteil (14) einen Spalt (15) zwischen dem Rand (17) des Gehäusedeckels (2) und dem Stator (6) abdichtet.
- wobei das Zwischenisolierteil (1) mit wenigstens einem Andrückelement (13) versehen ist, mit dem mindestens ein wärmeerzeugendes Bauteil (35) gegen eine Kühlfläche gedrückt wird,
**dadurch gekennzeichnet, dass**
- das Andrückelement Teil einer Wand (33, 36 bis 39) ist, die eine Tasche begrenzt, in der das zu kühlende Bauteil (35) in der Einbaulage liegt,
- wobei das Andrückelement einem Mantel (8) des Gehäusedeckels (2) mit radialem Abstand derart gegenüberliegt, dass das Andrückelement (33) das Bauteil (35) gegen den Mantel (8) des Gehäusedeckels (2) drückt,
- wobei die Kühlfläche für das Bauteil (35) der Mantel (8) des Gehäuses ist,
- wobei die Wand (33, 36 bis 39) durch eine Profilgebung des Mantels (12) des Zwischenisolierteiles (1) gebildet ist.

2. Elektromotor nach Anspruch 1,
**dadurch gekennzeichnet, dass** der freie Rand (13) des Zwischenisolierteiles (1) vom Dichtteil (14) umgriffen ist.

3. Elektromotor nach Anspruch 1 oder 2,
**dadurch gekennzeichnet, dass** der freie Rand (13) des Zwischenisolierteiles (1) über die Außenseite des Mantels (12) des Zwischenisolierteiles (1) vorsteht.

4. Elektromotor nach einem der Ansprüche 1 bis 3,
**dadurch gekennzeichnet, dass** das Zwischenisolierteil (1) für Befestigungsschrauben (23) wenigstens eine Durchtrittsöffnung 21,22) aufweist an deren Rand der aus einer Weichkomponente bestehende Dichtring (25) vorgesehen ist.

5. Elektromotor nach einem der Ansprüche 1 bis 4,
**dadurch gekennzeichnet, dass** das Andrückelement (39) federnd nachgiebig ausgebildet ist.

6. Elektromotor nach einem der Ansprüche 1 bis 5,
**dadurch gekennzeichnet, dass** das Andrückelement (33) wenigstens eine Andrücknase (40) aufweist.

7. Elektromotor nach Anspruch 6,
**dadurch gekennzeichnet, dass** die Andrücknase (40) an ihrem freien Ende mit einer Fase (41) versehen ist.

8. Elektromotor nach einem der Ansprüche 1 bis 7,
**dadurch gekennzeichnet, dass** das Andrückelement (33) über Stege (36 bis 39) an den Mantel (12) des Zwischenisolierteiles (1) angebunden ist.

## Claims

1. Electric motor with a stator (6), an electronics chamber (3) accommodating electrical/electronic components, which is housed in an electronic housing (4) and is lockable with a housing cover (2), and with at least one intermediate insulating part (1) provided to maintain creepage and clearance distances between the housing cover (2) and the electrical/electronic components;
- wherein the intermediate insulating part (1) has a hood-shaped carrier consisting of a hard, electrically insulating plastic, to which at least one sealing part (14, 25) made of a soft component is connected in a substance-to-substance and/or a positively locking manner,
- wherein the intermediate insulating part (1) comprises a jacket (12) extending across at least part of its circumference,
- at the free end of which the sealing part (14, 25) is arranged,
- wherein the sealing part (14) seals a gap (15) between the edge (17) of the housing cover (2) and the stator (6),
- wherein the intermediate insulating part (1) is provided with at least one pressing element (13), with which at least one heat-generating component (35) is pressed against a cooling surface,
**characterized in that**
- the pressing element is part of a wall (33, 36 to 39) delimiting a pocket, in which the component (35) to be cooled lies in the installation position,
- wherein the pressing element lies opposite to a jacket (8) of the housing cover (2) at a radial distance in such a way that the pressing element (33) presses the component (35) against the jacket (8) of the housing cover (2),
- wherein the cooling surface for the component (35) is the jacket (8) of the housing,
- wherein the wall (33, 36 to 39) is formed by a profiling of the jacket (12) of the intermediate insulating part (1).

2. Electric motor according to Claim 1, **characterized in that** the free edge (13) of the intermediate insulating part (1) is encased by the sealing part (14).

3. Electric motor according to Claim 1 or 2, **characterized in that** the free edge (13) of the intermediate insulating part (1) protrudes over the outer side of the jacket (12) of the intermediate insulating part (1).

4. Electric motor according to one of the Claims 1 to 3,
**characterized in that** the intermediate insulating part (1) comprises at least one through opening (21, 22) for fastening screws (23), at the edge of which the sealing ring (25) made of a soft component is provided.

5. Electric motor according to one of the Claims 1 to 4,
**characterized in that** the pressing element (39) is designed to be flexibly spring-loaded.

6. Electric motor according to one of the Claims 1 to 5,
**characterized in that** the pressing element (33) comprises at least one pressing nose (40).

7. Electric motor according to Claim 6,
**characterized in that** the pressing nose (40) is provided with a chamfer (41) at its free end.

8. Electric motor according to one of the Claims 1 to 7,
**characterized in that** the pressing element (33) is connected to the jacket (12) of the intermediate insulating part (1) via webs (36 to 39).

## Revendications

1. Moteur électrique, pourvu d'un stator (6), d'un compartiment électronique (3) réceptionnant des composants électriques/électroniques, qui est logé dans un boîtier électronique (4) et qui est verrouillable par un couvercle de boîtier (2) et d'au moins un intercalaire isolant (1), prévu entre le couvercle de boîtier (2) et les composants électriques/électroniques, pour assurer le respect des distances de fuite et/ou intervalles d'air,
- l'intercalaire isolant (1) disposant d'un support en forme de capot qui est constitué d'une matière plastique dure, isolante électrique, sur lequel au moins une pièce d'étanchéité (14, 25) en une composante souple se raccorde par matière et/ou par complémentarité de forme,
- l'intercalaire isolant (1) comportant une enveloppe (12) qui s'étend au moins sur une partie de sa périphérie,
- sur l'extrémité libre de laquelle est placée la pièce d'étanchéité (14, 25),
- la pièce d'étanchéité (14) assurant l'étanchéité d'une fente (15) entre le bord (17) du couvercle de boîtier (2) et le stator (6),
- l'intercalaire isolant (1) étant muni d'au moins un élément de pression (13) à l'aide duquel au moins un composant (35) générateur de chaleur est pressé contre une surface de refroidissement, **caractérisé en ce que**
- l'élément de pression est une partie d'une paroi (33, 36 à 39) qui délimite une poche dans laquelle le composant (35) qui doit être refroidi se situe dans la position de montage,
- l'élément de pression étant placé au vis-à-vis d'une enveloppe (8) du couvercle de boîtier (2) avec un écart radial, de telle sorte que l'élément de pression (33) presse le composant (35) contre l'enveloppe (8) du couvercle de boîtier (2),
- la surface de refroidissement pour le composant (35) étant l'enveloppe (8) du boîtier,
- la paroi (33, 36 à 39) étant formée d'un profilage de l'enveloppe (12) de l'intercalaire isolant (1).

2. Moteur électrique selon la revendication 1,
**caractérisé en ce que** le bord (13) libre de l'intercalaire isolant (1) est entouré par la pièce d'étanchéité (14).

3. Moteur électrique selon la revendication 1 ou 2,
**caractérisé en ce que** le bord (13) libre de l'intercalaire isolant (1) déborde par-dessus la face extérieure de l'enveloppe (12) de l'intercalaire isolant (1).

4. Moteur électrique selon l'une quelconque des revendications 1 à 3,
**caractérisé en ce que** l'intercalaire isolant (1) comporte pour des vis de fixation (23) au moins un orifice de passage (21, 22) sur le bord duquel est prévue la bague d'étanchéité (25) constituée d'une composante souple.

5. Moteur électrique selon l'une quelconque des revendications 1 à 4,
**caractérisé en ce que** l'élément de pression (39) est conçu avec une résilience élastique.

6. Moteur électrique selon l'une quelconque des revendications 1 à 5,
**caractérisé en ce que** l'élément de pression (33) comporte au moins un ergot presseur (40).

7. Moteur électrique selon la revendication 6,
**caractérisé en ce que** sur son extrémité libre, l'ergot presseur (40) est muni d'un biseau (41).

8. Moteur électrique selon l'une quelconque des revendications 1 à 7,
**caractérisé en ce que** l'élément de pression (33) est attaché par l'intermédiaire de listels (36 à 39) à l'enveloppe (12) de l'intercalaire isolant (1).
